# EUROPÄISCHE PATENTANMELDUNG

(11) **EP 1 191 752 A1**
(43) Veröffentlichungstag der Anmeldung: **27.03.2002**
(21) Anmeldenummer: 00120914.7
(22) Anmeldetag: 26.09.2000
(51) Int. Cl.: H04L 12/58

(54) **Verfahren und Vorrichtung zum Austausch von Informationen**

(71) Anmelder: Gens, Daniel, 65307 Bad Schwalbach (DE)
(72) Erfinder: Gens, Daniel, 65307 Bad Schwalbach (DE)
(74) Vertreter: Blumbach, Kramer & Partner GbR

(57) **Zusammenfassung**

Damit bei einem Verfahren und einer Vorrichtung zur Übertragung von Information, welche von einem Absender an wenigstens einen Empfänger gerichtet ist, unabhängig von der Art der versendeten Information eine Übertragung bereitstellt wird, welche insbesondere für den Absender ohne Mehraufwand zu handhaben ist und beim Empfänger ohne wesentlichen Mehraufwand weiterverarbeitbare Daten bereitstellt, ist vorgesehen, daß die Information in einer ersten Einrichtung aufgenommen und in elektronische Daten umgesetzt wird, die elektronischen Daten zu dem wenigstens einen Empfänger übertragen werden, und die eletronischen Daten beim Empfänger in einer vom Empfänger wählbaren Form bereitgestellt werden.

## Beschreibung

Die Erfindung betrifft allgemein ein System zur Übertragung von Information und im speziellen ein Verfahren zur Übertragung von Information gemäß dem Oberbegriff des Anspruchs 1 und eine Vorrichtung zur Übertragung von Information gemäß dem Oberbegriff des Anspruchs 22.

Es sind zahlreiche Verfahren zur Übertragung von Information bekannt. Dabei ist eines der bestbekannten und meistgenutzten Verfahren immer noch das klassische Versenden und Empfangen von Briefen. Hierbei liegen wegen der körperlichen Übersendung des Schriftstücks auf der Seite des Empfänger zwar in hohem Grade authentische Informationen vor, jedoch sind diese für eine nachfolgende Weiterbearbeitung, etwa in elektronischer Form nicht geeignet und erzeugen, soweit dies nötig ist hohe Kosten durch manuelle Erfassung oder das Scannen und Nachbearbeiten gescannter Texte. Darüber hinaus ist der körperliche Transport des Schriftstücks zeitaufwendig und kann in vielen Fällen nicht mehr den Bedürfnissen eines zügigen Informationsaustauschs genügen.

Die Übersendung von Schriftstücken per Telefax ist zwar schneller und führt während der Datenübertragung zu einem elektronischen Abbild der in dem Schriftstück enthaltenen Information, jedoch ist auch dieses elektronische Abbild oder ein entsprechender Ausdruck des Telefaxgerätes für eine weitere elektronische Bearbeitung der Information durch einen Empfänger in der Regel nicht geeignet.

Ferner existiert seit geraumer Zeit ein dem herkömmlichen Briefverkehr entsprechendes elektronisches Briefversendesystem, welches als electronic-mail oder auch als e-Mail bezeichnet wird. Hierbei werden Daten zwischen Computersystemen ausgetauscht, welche miteinander über ein Netzwerk oder einen Netzverbund kommunizieren. Es ist dabei möglich, Daten zwischen unterschiedlichen Computersystemen, beispielsweise zwischen Personalcomputern, auszutauschen. Die Funktionsabläufe in einem derartigen e-Mail-System sind abhängig von den jeweils auf den miteinander kommunizierenden Rechenanlagen installierten Betriebssystemen. Dabei soll das e-Mail-System durch Konvertierungsprogramme einen reibungslosen Übergang zwischen verschiedenen Betriebssystemen bereitstellen. Heutige e-Mail-Systeme weisen ferner bestimmte Benutzerfunktionen auf. So kann durch den Eingang oder durch das Lesen einer Nachricht auf der Empfängerseite eine Rückmeldung, die dieses bestätigt, an den Sender der Nachricht ausgelöst werden. Zur Erzeugung der zu übersendenden Daten können sowohl vom jeweiligen e-Mail-System bereitgestellte Editoren verwendet werden, als auch Computerdateien, welche mit anderen Textverarbeitungssystemen erzeugt wurden, importiert werden. Die letzteren werden dabei bei den herkömmlichen e-Mail-Systemen als sogenannte angehängte Dateien (ANNEX-file) versandt. Leider werden diese angehängten Dateien empfängerseitig häufig nur mit Problemen und Aufwand in die dort benutzten Systeme übertragen. Die Probleme resultieren aus den unterschiedlichen Datenstrukturen bzw. Inhalten der Sende- bzw.

Empfangssysteme. Die Unterschiede sind häufig in der Verschiedenartigkeit der verwendeten Soft- und Hardware begründet. Z.Bsp. Datenübertragung von KHK-Rechnungsprogramm in SAP R3. Dabei kann es insbesondere bei den zur Druckersteuerung oder Formatierung verwendeten Steuerzeichen zu einer Fehlinterpretation kommen, welche die Struktur der Dateien durcheinander bringen kann.

Neben den zuvor beschriebenen, rein elektronischen Briefversendesystemen existiert auch eine Mischform zwischen elektronischer Mail und herkömmlicher Versendung per Briefumschlag. Bei diesem sogenannten Hybrid-Mail-System werden die Daten der Sender elektronisch an eine Zentraleinheit übermittelt, in welcher sie gemäß der mitgelieferten Information des Senders ausgedruckt werden und diese ausgedruckten Daten dann herkömmlich per Post in einem Briefumschlag an den Empfänger übermittelt werden. Jedoch ist der empfangsseitige Vorgang des Ausdruckens und des herkömmlichen Verteilens der Daten weiterhin sehr zeitaufwendig. Zudem besteht empfängerseitig nicht die Möglichkeit, die Daten elektronisch weiterzuverarbeiten. Außerdem gestaltet sich die Erzeugung eines vom Absender vorgegebenen Druckbildes in der Zentraleinheit schwierig und entspricht häufig nicht mehr den Vorstellungen des Absenders.

Der Erfindung liegt daher die Aufgabe zugrunde, ein universelles System zur Übertragung von Information bereitzustellen, welches die vorstehenden Nachteile mildert und insbesondere unabhängig von der Art der versendeten Information eine schnelle und kostengünstige Übertragung bereitstellt, welche insbesondere für den Absender ohne Mehraufwand zu handhaben ist und beim Empfänger ohne wesentlichen Mehraufwand weiterverarbeitbare Daten bereitstellt.

Die Aufgabe wird auf überraschend einfache Weise bereits mit einem Verfahren mit den Merkmalen des Anspruchs 1 und einer Vorrichtung mit den Merkmalen des Anspruchs 22 gelöst.

Die Erfindung hat den großen Vorteil, daß die übersandten Daten empfängerseitig so vorliegen, wie sie von der Datenverarbeitungsumgebung des Absenders bereitgestellt wurden ohne daß es dabei zu Komplikationen kommt, wenn völlig verschiedenen Systeme auf der Seite des Absenders und des Empfängers eingesetzt werden.

Durch die Erfindung wird für den Anwender eine direkte Verbindung zwischen Absender und Empfänger geschaffen, welche unabhängig von der verwendeten technischen Ausrüstung sowohl das verwendete Schriftbild und den gewählten Seitenaufbau erhalten kann als auch direkt weiter nutzbare Daten bereithält.

Ein wesentlicher Gedanke der Erfindung besteht darin, daß auf der Seite des Absenders aus einer Fülle verschiedener Darstellungsmöglichkeiten, die sich aus der Vielzahl der möglichen verwendbaren Geräte ergibt, eine nahezu einheitliche Form der zu übertragenden Daten geschaffen wird. Dies kann beispielsweise dadurch erfolgen, daß die an einen Drucker abgesandten Daten aufgenommen und zu einem virtuellen Dokument umgesetzt werden, welches alle nötigen Informationen zum Seitenaufbau weiter behält. Ein spezieller Druckertreiber stellt hierbei das elektronische Interface zum virtuellen Papierdokument her. Da große Firmen für nahezu alle Textverarbeitungssysteme entsprechende Druckertreiber herstellen, kann hierdurch ein einfaches elektronisches Interface zu beliebigen Textsystemen bereitgestellt werden. Ferner können facsimiliert vorliegende Daten, wie diese beispielsweise bei der Übertragung von Telefaxen oder beim Einscannen von Dokumenten erzeugt werden, ebenfalls zu virtuellen Seiten eines virtuellen Dokuments aufgebaut werden. In diesen Fällen kann eine nachgeschaltete OCR- bzw. Schrifterkennungssoftware weiterverwendbare elektronische Daten bereitstellen.

In vorteilhafter Weise werden mit der Information auch Rahmendaten übertragen, welche die Daten betreffende Strukturinformation und/oder Bearbeitungsinformation enthalten. Ferner kann die Weiterleitung auch auf vollständig elektronischem Wege geschehen, wenn beispielsweise durch Schrifterkennung oder entsprechende Zuordnung der Daten Empfänger-Adressdaten für die elektronische Adressierung bereitgestellt werden.

In besonders vorteilhafter Weise kann ein im Netzwerk oder einem Netzverbund befindliches elektronisches Portal die Daten empfangen, speichern und unter Beachtung der jeweiligen vorgegebenen Sicherheitsstufen entsprechend weiterleiten.
Ein derartiges Portal kann mehrere auswählbare Einheiten (Auswahleinheiten) umfassen, welche die elektronische Weiterleitung und den Empfang in Form von Knotenpunkten übernehmen, wird aber von dem Benutzer vorzugsweise als nur ein "großes elektronisches Postamt" wahrgenommen.
Durch die Bereitstellung von zusätzlicher Bearbeitungsinformation kann jedoch die Übertragung an eine möglichst optimal geeignete Auswahleinheit des Netzverbundes erfolgen, und die Auswahleinheit in Abhängigkeit von den Bearbeitungsinformationen die Daten für den wenigstens einen Empfänger bereithalten.

Die Bearbeitungsinformationen können in vorteilhafter Weise weitere Angaben über den oder die Empfänger wie Angaben zur Art und Zeit der Weiterleitung oder die einzuhaltende Sicherheitsstufe enthalten.

Die Bearbeitungsinformationen können ferner eine Befehlssequenz mitführen, welche in Abhängigkeit von einer Zustellung der Daten an den wenigstens einen Empfänger ein Empfangssignal an den Absender auslöst.

Außerdem weisen die Strukturinformationen vorteilhaft eine Beschreibung des Aufbaus der Daten auf. Die Beschreibung enthält dabei auch Steuerinformationen zum Aufbau des Druckbildes am Ort des Empfängers. Somit wird mit Vorteil ein "virtuelles Druck-Dokument" gesendet und empfangen. Die übertragenen Daten sind somit redundant.

Als Daten können reine Textdateien, Bilddateien, Mischdateien oder im Wesentlichen aus Zahlen bestehende Rechnungs- oder Bestellformulare übertragen werden, ohne daß der Benutzer eine irgendwie geartete Beschränkung erfährt.
Möglich ist es auch, das erfindungsgemäße Verfahren für die automatisierte Erstellung und Versendung von Telefonabrechnungen oder Kreditkartenabrechnungen einzusetzen. Vorteilhaft dabei ist dabei auch die automatisierte elektronische Überwachung eines Zahlungseinganges bei gleichzeitigem Vorliegen eines gedruckten Zahlungsbeleges.

Somit bringt die Erfindung auch den Vorteil mit sich, daß ein Wechsel von elektronischem Datensatz zu daraus erzeugten Druck-Dokumenten beziehungsweise die Umwandlung in umgekehrter Richtung empfängerseitig oder senderseitig nicht mehrfach durchgeführt werden muß.

Mit einer Sicherung kann die zu übertragende Information vorteilhaft gegen unbefugtes Lesen und/oder eine Datenmanipulation zu gesichert werden. Dabei kann die Sicherung durch eine Stimmerkennung und/oder eine Handschriften-Authentisierung gegeben sein. Ferner kann die Sicherung durch die Angabe eines vorgebbaren Kennwortes erfolgen. Digitales Wasserzeichen.

Gemäß der Erfindung kann eine Sicherungskennung, welche Daten zur Sicherung sowie zur Verwendung umfaßt, jeweils für die Information und/oder die Strukturinformationen und/oder die Bearbeitungsinformationen mitgeführt werden. Dabei können die einzelnen Sicherungskennungen unabhängig voneinander aufgebaut sein oder logisch miteinander verknüpft sein. Mit Vorteil kann somit eine hierarchische Zugangsstruktur zu den Daten aufgebaut werden.

Bei einer Variante des erfindungsgemäßen Verfahrens werden die Daten mit Testsequenzen zur Kontrolle des Ablaufs übertragen. Es können aber auch in vorgegebenen Intervallen Testdaten zu einer Überprüfung übertragen werden.
In dem erfindungsgemäßen Verfahren werden der Absender und der wenigstens eine Empfänger bei der Auswahleinheit registriert. Somit ist mit Vorteil eine Vorlage einer Kennung möglich, welche über die Bearbeitungsinformationen selbsttätig überprüft werden kann. Die Verbindung zum Empfänger kann erfindungsgemäß auf verschiedene Art und Weise erfolgen.

So können die Daten über funkbetriebene Endgeräte aus der Auswahleinheit ausgelesen werden. Der oder die Empfänger können die Daten wahlweise auch über optisch angekoppelte Endgeräte aus der Auswahleinheit auslesen oder Daten in diese zurücksenden. Daraus ergeben sich direkte unbeschränkte Zugangsmöglichkeiten, wodurch aber die Aufbereitungsqualität der Daten nicht leidet.

So ist es beispielsweise möglich, daß einem Empfänger das Vorhandensein einer Übersendung an dessen Handy angezeigt wird, dieser diese beispielsweise empfangen und lesen, etwa im WAP-Standard lesen und die entsprechende Weiterleitung veranlassen kann, ohne daß hierdurch die Qualität der nachfolgend empfangenen Übersendung negativ beeinflußt wird.

Die Erfindung wird nachfolgend anhand der beiliegenden Zeichnung an einem bevorzugten Ausführungsbeispiel näher erläutert.

Es zeigen:
- Fig. 1: eine Darstellung des Informationsverlustes bei herkömmlichem, auf Papier erfolgendem Informationsaustausch, wie beispielsweise bei Brief- oder Telefaxübersendung,
- Fig. 2: eine Darstellung des erfindungsgemäßen, Informationstransports, bei welchem durch Verwendung eines virtuellen Papierdokuments im wesentlichen kein Informationsverlust auftritt,
- Fig. 3: eine schematische Darstellung einer erfindungsgemäßen Datenübertragungseinrichtung.

Die Erfindung wird nachfolgend, ohne Beschränkung der Allgemeinheit, zunächst anhand einer bevorzugten Ausführungsform beschrieben, wobei zum besseren Verständnis vorab auf die bisherige Situation und bei der Beschreibung verwendete Definitionen und Begriffe eingegangen wird.

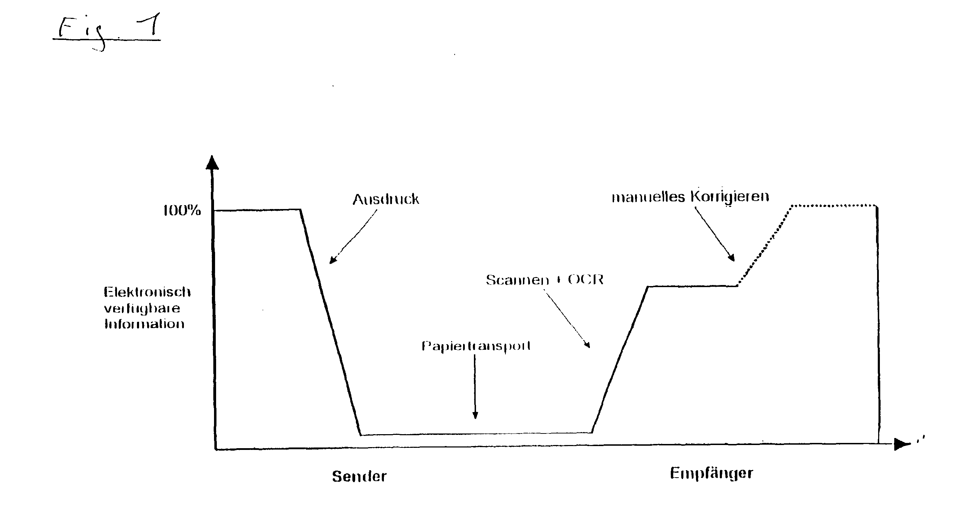

Aus Fig. 1 ist der bei bisheriger per Brief oder Telefax erfolgender Versendung von schriftlicher, benutzerbezogener Information auftretende Verlust an weiterverarbeitbarer Information klar zu erkennen.

Durch den Vorgang des Ausdruckens wird zunächst die elektronisch verfügbaren Information am Ort des Senders auf nahezu Null reduziert, und es liegen selbst im Falle einer Telefaxübermittlung auf der Seite des Empfängers zwar körperlich archivierbare Schriftstücke aber nicht unmittelbar weiterverarbeitbare Daten vor. Erst das zeit- und fehlerträchtige Einscannen des Schriftstücks mit nachfolgender Fehlerkorrektur schafft wieder einen Datensatz, welcher eine empfängerspezifische Auswertung ermöglicht. Hierbei fallen jedoch Personalkosten in nicht unerheblichem Maß an.

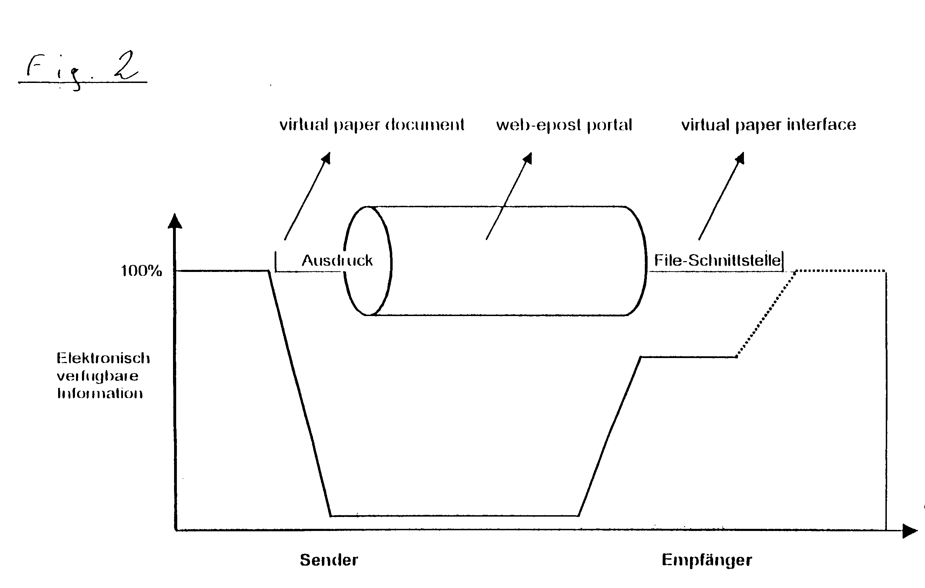

Fig. 2 zeigt, wie der Grundgedanke der vorliegenden Erfindung auf einfache Weise umsetzbar ist und es werden nachfolgend zunächst technische Grundkonzepte der Erfindung beschrieben, bevor eine detaillierte Beschreibung des bevorzugten Ausführungsbeispiels vorgenommen wird.

Bereits zu einem sehr frühen Zeitpunkt, dies bedeutet entweder bei Bereitstellung der Druckdaten für einen Drucker oder etwa beim Versenden von Telefaxsignalen oder eines e-Mail-Anhangs, wird ein virtuelles Papierdokument erzeugt, welches alle benutzerbezogene Information umfaßt. Dies bedeutet, es werden in einer systemunabhängigen Weise sowohl alle Inhalte der schriftlichen Information als auch alle auf die Form bezogenen Daten erfaßt und weitergeleitet.

Das als web-epostviper-portal bezeichnete elektronische Portal oder elektronische Postamt, welches sich im Internet oder in einem Intranet befindet, empfängt diese Daten und stellt in einer einfachsten Ausführungsform diese Daten einem Empfänger zur Verfügung oder übernimmt die Übersendung an den Empfänger selbst.

Am Ort des Empfängers wird das virtuelle Papierdokument in eine beliebige Ausgabeform umgewandelt, beispielsweise eine druckbare Datei oder ein Telefaxempfangssignal, welches zu entsprechender schriftlicher Information ohne Verluste an Inhalt oder Form der zweidimensionalen Darstellung führt. In jedem Falle umfasst das virtuelle Papierdokumet, welches auch in den Figuren als virtual paper document bezeichnet wird, alle benutzerbezogene Information in elektronischer, weiterbe- und -verarbeitbarer Form.

Die Erfindung beinhaltet somit auch eine Plattform zum Austausch von Datenformat- bzw. Strukturbeschreibungen.
Der Empfänger erzeugt eine oder mehrere Beschreibungen wie er Daten in sein System übernehmen kann. Diese Beschreibung wird in dem nachfolgend noch detaillierter beschriebenen viper-System, welches eine im Inter- oder einem Intranet auswählbare Einheit darstellt, unter seiner Adresse gespeichert. Diese auswählbare Einheit wird nachfolgend auch als Auswahleinheit bezeichnet. Der Sender sendet als Bestandteil des virtuellen Papiers ebenfalls die Beschreibung der Sendedaten bzw. Struktur. Das viper-System führt eine automatische bzw. unterstützte Anpassung der beiden Formate durch.

Eine mögliche Ausführungsform der Beschreibungen wird mittels einer Beschreibungssprache, beispielsweise XML realisiert.

Beispiel für eine derartige Beschreibung der Formate:

| Sender: | |
|---|---|
| Rechnungsnr. | 5 Stellen numerisch |
| Rechnungsdaten | 6 Stellen Datum |
| Gesamtsumme | 10.2 Stellen Double |
| ..... | |

| Empfänger: | |
|---|---|
| Lieferantennr. | 8 Stellig numerisch |
| Rechnungsnr. | 10 Stellig numerisch |
| Mwst. | 7.2 Stellen Double |

Der Anpassungsprozess ist iterativ und läuft bis alle empfangsseitig notwendigen Daten vorhanden und im definierten Format vorliegen. Zu diesem Zweck baut das viper-System eine bidirektionale Kommunikationsverbindung per Intra- oder Internetverbindung oder per direkter Anwahl eines empfängerseitigen Modems zum Empfänger auf und tauscht Zugum-Zug alle zur Beschreibung des Empfängerformats notwendigen Daten aus.

Während der gesamten Übertragungskette kommt es somit weder zum Verlust an elektronisch verfügbarer Information noch zu einer zusätzlichen Beanspruchung der Benutzer, da durch entsprechenden Schnittstellen jeweils die bereits vorhandenen Einrichtungen verwendbar sind.

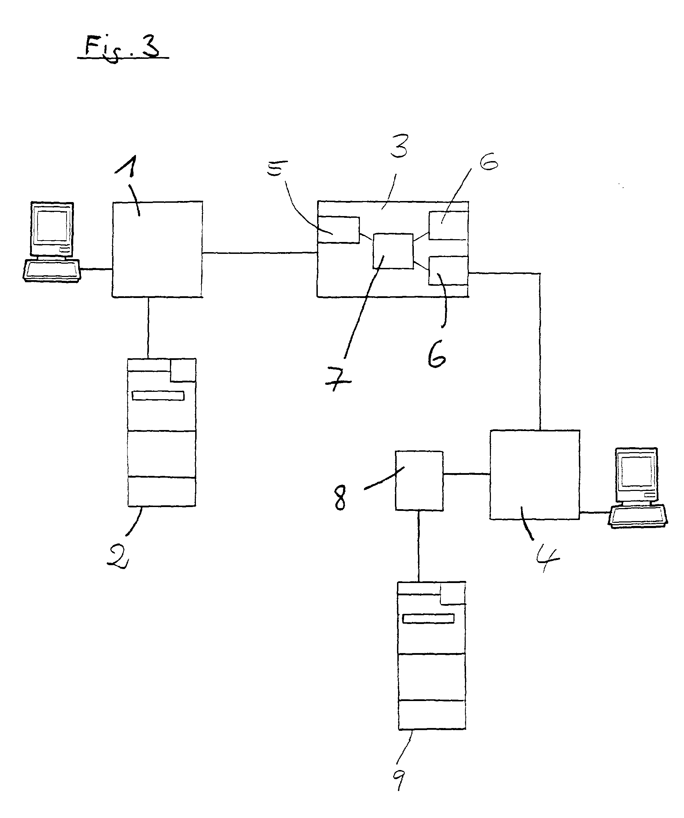

Bei einer bevorzugten praktischen Ausführungsform der Erfindung wird all dies wie nachfolgend beschrieben realisiert. Es wird auf Fig. 3 Bezug genommen, in welcher der Absender zu übertragende Information vorzugsweise mit einem Personalcomputer erzeugt, der an eine erste elektronische Einrichtung 1 angeschlossen ist, welche mit einer Auswahleinheit 3 des Internetportals, dem viper-System kommuniziert. Der Anschluß des Personalcomputers kann über eine Netzwerkverbindung, eine serielle oder parallele Datenverbindung, optisch oder auch über eine DFÜ-Schnittstelle per Modem, vorzugsweise per digitalem Modem, beispielsweise per ISDN-Modem erfolgen. Somit ist die elektronische Einrichtung 1 vorteilhaft zwar am Ort des Absenders angeordnet, muß dies aber nicht sein. Gleiches gilt für die elektronische Einrichtung 4 am Ort des Emfängers.

Der Absender kann ein beliebiges herkömmliches Textdatenverarbeitungssystem verwenden, mit dem er auch seine spezifischen Absenderdaten aufbereitet, etwa die Darstellung eines Firmenlogos und/oder die Adresse unter anderem mit e-Mail-Adressen oder Telefonnummern.

Nach dem Erzeugen der Information in einem Textverarbeitungssystem Datenverarbeitungssystem kann diese in einer Datei abgelegt werden. Die Datei kann dann in einem absenderseitig vorhandenen Drucker ausgedruckt werden und es können etwaige Fehler durch Überprüfung des Druckbildes beseitigt werden.

Der Absender kann dann die der Druckversion 2 entsprechenden druckfähigen Daten, ein "virtuelles Druck-Dokument", mit einem herkömmlichen e-Mail-System direkt an ein elektronisches Portal, beispielsweise an das web-epostviper-portal aus Fig. 2 mit einer Auswahleinheit 3 übertragen oder kann diese Daten der ersten elektronischen Einrichtung 1 übersenden, welche über eine Drucker-Eingangsschnittstelle verfügt und die Weitersendung automatisiert vornimmt.

Vorzugsweise ist die Auswahleinheit 3 über ein Intranet oder das Internet jeweils mit dem Absender und wenigstens einem Empfänger verbunden.

In weiterer Ausgestaltung der Erfindung umfaßt die elektronische Einrichtung 1 des Absenders sowie die elektronische Einrichtung 4 des Empfängers jeweils optional eine Datenendgeräte-Schnittstelle welche Daten überträgt, die per analogem oder digitalem Telefax abgesandt wurde, wobei auch für diesen Datentyp per Schrifterkennungssoftware weiterverarbeitbare Textbestandteile erstellt werden und diese mit einer entsprechenden Formatbeschreibung versehen zu einem virtuellen Dokument verarbeitet werden, welches dem Empfänger parallel zu dem Empfang des Telefax als weiterverarbeitbares elektronisches Dokument in gleicher Weise wie der vom Textverarbeitungssystem erzeugte und zu einem virtuellen Dokument umgesetzte Datensatz zur Verfügung gestellt wird.

Ferner verfügen die elektronischen Einrichtungen 1 und 4 wahlweise über eine Scanner-Schnittstelle um Daten übertragen und umsetzen zu können, welche bereits als zweidimensionale Daten auf Papier oder einer Folie vorliegen.

Zur Kommunikation zwischen dem Personalcomputer und der Einrichtung 1 bzw. 4 kann ferner eine Infrarotschnittstelle oder auch eine Schnittstelle nach dem Bluetoothstandard eingesetzt werden.

Die Auswahleinheit 3 ist in einer besonders bevorzugten Ausführungsform der vorliegenden Erfindung als Internet-Portal ausgeführt. Über eine Internetverbindung ist ein Kontakt zwischen dem Empfänger und der Auswahleinheit 3 vorgesehen. Dazu weist die Auswahleinheit 3 neben einer Eingangsbox 5 eine vorzugsweise mehrere Ausgangsboxen 6 auf. Eine vom Absender 1 eingehende Datei wird in der Eingangsbox 5 zwischengespeichert.

Vorzugsweise wird von einem in der Auswahleinheit 3 vorgesehenen Prozessor 7 die eingehende Datei auf empfängerspezifische Informationen überprüft und bei Vorhandensein dieser ausgelesen. Der Prozessor 7 veranlaßt dann die Übergabe der Datei an eine Adresse entsprechend der in der Datei enthaltenen empfängerspezifischen Information, etwa eine e-Mail-Adresse des Empfängers.

Vorzugsweise wird die Datei von dem Prozessor 7 in die dem Empfänger 4 zugeordnete Ausgangsbox 6 eingelesen. Der Empfänger 4 erhält daraufhin eine Nachricht darüber, daß in der ihm zugeordneten Ausgangsbox 6 der im Netzverbund vorgesehenen Auswahleinheit 3 eine Datei bereitgehalten wird. Diese Nachricht wird als e-Mail und/oder auch als Anruf auf ein SMS- oder WAP-fähiges übertragen.

Der Empfänger kann nun unter Rücksendung einer elektronischen Kennung an die Auswahleinheit 3 sich Zugang zu der Ausgangsbox 6 verschaffen und die Daten dort auslesen.
Die so ausgelesenen Daten werden nun empfängerseitig in der dort vorhandenen Datenverarbeitungsumgebung 8 in eine Druckversion 9 umgewandelt.

Diese Umwandlung kann entweder in der Datenverarbeitungseinrichtung 8 des Empfängers oder in einer vorgeschalteten zweiten elektronischen Einrichtung 4 am Ort des Empfängers erfolgen.

Zur Umwandlung wird die Strukturinformation überprüft und darin enthaltene Steuerzeichen an die empfängerseitigen Druckertreiber gegeben. Bei einer notwendigen Anpassung an die empfängerseitige Datenverarbeitungsumgebung 8 kann diese mit Hilfe von einem den Daten ebenfalls beigefügten Formatierungssatz dynamisch vorgenommen werden.
Die Druckversion 9, die empfängerseitig erzeugt wird, ist erfindungsgemäß identisch zu derjenigen 2, die in der Datenverarbeitungsumgebung des Absenders erzeugt worden ist. So ist etwa das Firmenlogo, das etwa vom Absender eingegeben worden ist, identisch übertragen worden. Auch die weitere in der Datei enthaltene Information, wie z.B. ein kompletter Rechnungsdatensatz in zu zahlender Rechnungsbeitrag sind ohne eine Manipulation in der Druckversion 2 der Datei empfängerseitig vorhanden.

Die Erfindung sieht des Weiteren vor, daß der Empfänger 4 durch Vorlage eines elektronischen Paßwortes den direkten Zugang zu den Daten erhält. So kann der Empfänger beispielsweise einen in der Datei eingegebenen Rechnungsbeitrag direkt in ein Buchungs- bzw. Buchführungsprogramm seiner Datenverarbeitungsumgebung 8 elektronisch einlesen.

Sofern ein Zahlungsvorgang absenderseitig zu bestätigen ist, kann der Empfänger 4 über das erfindungsgemäße Verfahren eine entsprechende, von ihm durchgeführte Zahlungsanweisung an den Absender 1 zurücksenden. Dabei kann er in seiner Datenverarbeitungsumgebung 8 ein Druckbild 9 der Zahlungsanweisung erzeugen. Dieses von ihm erzeugte Druckbild ist identisch zu demjenigen 2, was nach einer Übermittlung der Daten an den Absender in der dortigen Datenverarbeitungsumgebung über einen gewöhnlichen Druckvorgang erzeugt wird.

Bei einem ausgeführten Lese- und Weiterverarbeitungsvorgang auf der Seite des Empfängers 4 kann über die Auswahleinheit 3 wahlweise eine Bestätigung, welche in etwa einem Rückschein eines herkömmlich mit der Post übersandten Einschreibens entspricht, an den Absender 1 übermittelt werden.

Diese Bestätigung kann auch mit einem digitalen Wasserzeichen versehen sein, welches die Identität des Empfängers bestätigt und somit dem Absender 1 die korrekte Übertragung der Daten anzeigt.

Die Erfindung ist nicht auf das beschriebene Ausführungsbeispiel beschränkt, welches in vielfacher Art und Weise abgewandelt werden kann. So kann im Rahmen der vorliegenden Erfindung der Zugang sowohl empfänger- als auch absenderseitig auf verschiedenste Art und Weise durchgeführt werden. So ist neben einem herkömmlich vernetzten Computer oder einer Datenverarbeitungseinheit der Zugang auch über ein Funktelefon (Handy) oder etwa über einen mit einem Modem ausgestatteten tragbaren Computer (Laptop) sowie entsprechende Abkömmlinge wie einem Palmtop oder einem Organizer möglich.

Es liegt ferner im Rahmen der Erfindung, die Ausgabe der Daten und deren Aufbereitung empfängerseitig durch die elektronische Einrichtung 4 über eine Telefaxschnittstelle der Einrichtung 4 durchzuführen.

Ohne Beschränkung der Allgemeinheit kann in dem beschriebenen Ausführungsbeispiel der Empfänger auch der Absender sein, da die Erfindung ein bidirektionales System beschreibt.

Das erfindungsgemäße Verfahren kann auch zwischen mehreren Absendern und/oder Empfängern eingesetzt werden, wobei die entsprechend nötige Vervielfältigung durch die Auswahleinheit 3 vorgenommen wird.

Wie vorstehend beschrieben kann eine einfache Ausführungsform der Erfindung in einer reinen Softwarelösung bestehen, wenn die als Druckdaten erzeugten Daten von der Software zu einem virtuellen Dokument umgesetzt und an die Auswahleinheit 3 abgesandt werden. In diesem Falle ist der absender- und empfängerseitige Personalcomputer nicht jeweils mit der elektronischen Einrichtung 1 bzw. 4 sondern direkt mit dem Netzwerk der Auswahleinheit 3 verbunden.

Andererseits kann die Verwirklichung der Erfindung basierend auf einer stärker Hardware-orientierten Lösung einfach darin bestehen, daß die elektronischen Einrichtungen 1 und 4 an die bereits beim Absender bzw. Empfänger vorhandene Hardware angeschlossen werden und diese Hardware dann die komplette Kommunikation übernimmt. Hierbei kann beispielsweise der elektronischen Einrichtung 1 bzw. 4 eine bestimmter Drucker im Textverarbeitungsprogramm oder eine bestimmte Telefonnummer im Telefaxgerät zugeordnet werden, wodurch die Daten dann der Auswahleinheit 3 automatisch zugeleitet werden können.

Empfänger können direkt in den Textfeldern des vom Benutzer erzeugten Schriftstücks angegeben werden und werden dadurch automatisch durch die Auswahleinheit 3 mit der Information wie vom Benutzer angegeben versorgt. Alternativ können bestimmten Empfängern bestimmte Telefonnummern oder im Textsystem anwählbare Drucker zugeordnet werden, wodurch dann ebenfalls eine Weiterleitung an den zugeordneten Empfänger erfolgt.

## Patentansprüche

1. Verfahren zur Übertragung von Information, welche von einem Absender an wenigstens einen Empfänger gerichtet ist, **dadurch gekennzeichnet, daß**
die Information in einer ersten Einrichtung aufgenommen und in elektronische Daten umgesetzt wird,
die elektronischen Daten zu dem wenigstens einen Empfänger übertragen werden, und
die elektronischen Daten beim Empfänger in einer vom Empfänger wählbaren Form bereitgestellt werden.

2. Verfahren zur Übertragung von Information nach Anspruch 1, bei welchem
die zu übertragende Information aus einer beliebigen zweidimensionalen oder elektronischen Form in elektronische Daten gewandelt wird, welche auf einem Netzwerk oder einem Netzverbund an den wenigstens einen Empfänger übertragen werden.

3. Verfahren zur Übertragung von Information nach Anspruch 1 oder 2, bei welchem
die frei wählbare Form der Datenwiedergabe, die Anzeige der Daten auf einem Monitor oder einem Datenwiedergabegerät, sowie den Ausdruck in zweidimensionaler Form durch einen, vorzugsweise an einen Rechner angeschlossenen, Drucker oder ein Telefaxgerät umfaßt und
ohne Auswahl der Form der Datenwiedergabe durch den Empfänger die Datenwiedergabe in einer Standardausgabeform erfolgt.

4. Verfahren zur Übertragung von Information nach einem der Ansprüche 1, 2 oder 3 bei welchem
mit der Information Rahmendaten, welche die Daten betreffende Strukturinformation und/oder Bearbeitungsinformation enthalten, an eine Auswahleinheit des Netzwerks oder Netzverbundes übertragen werden und
die Auswahleinheit in Abhängigkeit von der Bearbeitungsinformation die Daten für den wenigstens einen Empfänger speichert und abrufbar bereithält.

5. Verfahren nach Anspruch 4, bei welchem die Bearbeitungsinformation Information über den wenigstens einen Empfänger enthält.

6. Verfahren nach Anspruch 4 oder 5,
bei welchem die Bearbeitungsinformation Angaben zur Art und Zeit der Weiterleitung an den wenigstens einen Empfänger enthält.

7. Verfahren nach einem der Ansprüche 4, 5 oder 6, bei welchem die Bearbeitungsinformation eine Befehlssequenz umfaßt, welche in Abhängigkeit von einer Zustellung der Daten an den wenigstens einen Empfänger ein Empfangssignal an den Absender auslöst.

8. Verfahren nach einem der Ansprüche 4 bis 7,
bei welchem die Bearbeitungsinformation Daten betreffend eine Abfrage für eine Zugangsberechtigung enthält.

9. Verfahren nach einem der Ansprüche 4 bis 8,
bei welchem die Strukturinformation absenderspezifische Daten enthält.

10. Verfahren nach einem der Ansprüche 4 bis 9,
bei welchem die Strukturinformation eine Beschreibung des Aufbaus der elektronischen Daten enthält.

11. Verfahren nach Anspruch 10,
bei welchem die Beschreibung Steuerinformation zum Aufbau eines Druckbildes enthält.

12. Verfahren nach einem der Ansprüche 1 bis 11,
bei welchem die elektronischen Daten mit einer Sicherungskennung zumindest teilweise gegen unbefugtes Lesen und/oder Daten-Manipulation gesichert sind.

13. Verfahren nach Anspruch 12,
bei welchem die Sicherungskennung Daten zur Stimmererkennung umfaßt.

14. Verfahren nach Anspruch 12 oder 13,
bei welchem die Sicherungskennung Daten zur Handschriftenauthentisierung umfaßt.

15. Verfahren nach Anspruch 12, 13 oder 14,
bei welchem die Sicherungskennung ein Kennwort umfaßt.

16. Verfahren nach einem der Ansprüche 12 bis 15,
bei welchem eine Sicherungskennung jeweils für die zu übertragende Information und/oder die Strukturinformation und/oder die Bearbeitungsinformation erstellt und übertragen wird.

17. Verfahren nach einem der Ansprüche 1 bis 16,
bei welchem die Daten Testsequenzen enthalten.

18. Verfahren nach einem der Ansprüche 1 bis 17,
bei welchem von zumindest einer ersten Einrichtung oder der Auswahleinheit in vorgegebenen Intervallen Testdaten übertragen werden.

19. Verfahren nach einem der Ansprüche von 4 bis 15,
bei welchem der Absender und der wenigstens eine Empfänger bei der Auswahleinheit zusammen mit Daten zur Sicherungskennung registriert werden.

20. Verfahren nach einem der Ansprüche 4 bis 19,
bei welchem der wenigstens eine Empfänger die Daten über funkbetriebene Endgeräte, insbesondere Mobilfunkgeräte, aus der Auswahleinheit auslesen kann.

21. Verfahren nach einem der Ansprüche 1 bis 21,
bei welchem
die erste Einrichtung elektronische Daten erzeugt, welche einer virtuellen Seite oder einem virtuellen Dokument mit mehreren virtuellen Seiten entsprechen und
die zweite Einrichtung aus den elektronischen Daten einer virtuellen Seite jeweils Daten für ein zweidimensionales Abbild erstellt,
wobei die Daten für das zweidimensionale Abbild je nach Auswahl der Form der Wiedergabe durch den Empfänger:
i) für ein Faxgerät empfangbare Daten,
ii) für ein ausgewähltes Textsystem Datenverarbeitungssystem formatierte, editierbare Daten,
iii) für einen bestimmten Drucker ausdruckgerecht formatierte Daten umfaßt.

22. Vorrichtung zur Übertragung von Information, insbesondere zur Durchführung eines Verfahrens nach den Ansprüchen von 1 bis 22, bei welcher die Information von einem Absender an wenigstens einen Empfänger gerichtet ist, welche **gekennzeichnet ist durch**
eine erste elektronische Einrichtung (1), in welcher die Information aufgenommen und in elektronische Daten umgesetzt wird, und
eine zweite elektronische Einrichtung (4), in welcher die elektronischen Daten beim Empfänger in einer vom Empfänger wählbaren Form bereitgestellt werden.

23. Vorrichtung zur Übertragung von Information nach Anspruch 22, bei welcher die erste Einrichtung (1) eine Drucker-Schnittstelle, eine Datenendgeräte-Schnittstelle für den Anschluß eines Datenendgerätes, insbesondere eines Telefaxgerätes, an das analoge Telefonnetz eine Datenendgeräte-Schnittstelle für den Anschluß eines Datenendgerätes, insbesondere eines Telefaxgerätes, an das digitale Telefonnetz, und/oder eine Scanner-Schnittstelle umfaßt.

24. Vorrichtung zur Übertragung von Information nach Anspruch 23, bei welcher die zu übertragende Information in der ersten elektronischen Einrichtung (1)
an der Druckerschnittstelle empfangen wird, falls diese aus einem Text- oder Datenverarbeitungssystem generiert ist,
an der Datenendgeräte-Schnittstelle empfangen wird, falls diese per analogem oder digitalem Telefax abgesandt wurde, und/oder
an der Scanner-Schnittstelle empfangen wird, falls diese als zweidimensionale Daten auf Papier oder einer Folie vorliegen.

25. Vorrichtung nach Anspruch 24, bei welcher die empfangenen Daten in der ersten elektronischen Einrichtung (1) in ein Datenformat umgesetzt werden, welches einer virtuellen Seite oder einem virtuellen Dokument mit mehreren virtuellen Seiten entspricht und an die zweite elektronische Einrichtung (4) und/oder eine Auswahleinheit (3) abgesandt werden, und ohne Auswahl der Ausgabeform durch den Empfänger in einer Standardausgabeform bereitgestellt werden.

26. Vorrichtung zur Übertragung von Information nach Anspruch 22, 23, 24 oder 25, bei welcher
die zweite Einrichtung (4) einen Monitor, vorzugsweise eines Personalcomputers oder ein Datenwiedergabegerät zur Anzeige der übertragenen und in der zweiten elektronischen Einrichtung (4) oder der Auswahleinheit aufbereiteten Daten umfaßt und/oder,
einen Drucker oder ein Telefaxgerät für den Ausdruck der Daten in zweidimensionaler Form umfaßt.

27. Vorrichtung zur Übertragung von Information nach einem der Ansprüche von 22 bis 26, bei welcher
von der ersten Einrichtung (1) oder von der Auswahleinrichtung (3) zusätzliche elektronische Daten erzeugt werden, welche der Information zugeordnete Rahmendaten enthalten,
wobei die Rahmendaten die elektronischen Daten betreffende Strukturinformation und/oder Bearbeitungsinformation enthalten.

28. Vorrichtung zur Übertragung von Information nach einem der Ansprüche von 22 bis 27, ferner umfassend
eine Auswahleinheit (3) in einem Netzwerk oder Netzverbund, zu welcher die elektronischen Daten von der ersten Einrichtung (1) übertragbar sind,
wobei die Auswahleinheit (3) in Abhängigkeit von der Bearbeitungsinformation die Daten für den wenigstens einen Empfänger speichert und abrufbar bereithält.

29. Vorrichtung zur Übertragung von Information nach Anspruch 27 oder 28, bei welcher die Bearbeitungsinformation Angaben zur Art und Zeit der Weiterleitung an den wenigstens einen Empfänger enthält.

30. Vorrichtung zur Übertragung von Information nach Anspruch 27, bei welcher
die Auswahleinheit (3) die Weiterleitung der elektronischen Daten an eine zweite elektronische Einrichtung (4), welche sich vorzugsweise am Ort des wenigstens einen Empfängers befindet, gesteuert durch die Bearbeitungsinformation durchführt.

31. Vorrichtung zur Übertragung von Information nach einem der Ansprüche von 22 bis 30, bei welcher
die zweite elektronische Einrichtung (4) und/oder die Auswahleinheit (3) aus der Bearbeitungsinformation Daten betreffend eine Abfrage für eine Zugangsberechtigung extrahiert und basierend auf diesen Daten eine Zugangsberechtigungsabfrage durchführt.

32. Vorrichtung zur Übertragung von Information nach einem der Ansprüche von 22 bis 31, bei welcher in einem Speicherbereich der Auswahleinheit (3) und/oder der zweiten elektronischen Einrichtung (4) Daten betreffend den Absender und den wenigstens einen Empfänger zusammen mit Daten zur Sicherungskennung, vorzugsweise verschlüsselt, abgespeichert werden.

33. Vorrichtung nach einem der Ansprüche von 22 bis 32, bei welcher die Auswahleinheit (3) und/oder die zweite elektronische Einrichtung (4) eine Schrifterkennungseinheit umfaßt, mittels welcher digitalisiert vorliegende handschriftliche Information in digitale Textdaten umsetzbar ist.

34. Vorrichtung nach Anspruch 33, bei welcher in der Auswahleinheit (3) aus den digitalen Textdaten Steuerungsdaten gewonnen werden, um hierdurch eine Weiterleitung an einen bestimmten Empfänger oder eine Speicherung der Daten zu bewirken.

35. Vorrichtung nach einem der Ansprüche von 22 bis 34, bei welcher die Auswahleinheit (3) und/oder die zweite elektronische Einrichtung (4) eine Funkschnittstelle umfaßt, mit welcher aus der zu übertragenden Information für den mobilen Empfang taugliche, insbesondere SMS- oder WAP-formatierte Daten erzeugt und dem wenigstens eine Empfänger übermittelt werden.

36. Vorrichtung nach Anspruch 35, bei welcher die insbesondere SMS- oder WAP-formatierten Daten nach Aufforderung durch ein funkbetriebenes Endgerät, insbesondere Mobilfunkgerät, übermittelt werden.

37. Vorrichtung nach einem der Ansprüche 22 bis 36,
bei welchem die zweite elektronische Einrichtung über eine Infrarotschnittstelle verfügt, mittels welcher die empfangenen elektronischen Daten über optisch angekoppelte Endgeräte auslesbar sind.

38. Vorrichtung nach einem der Ansprüche 22 bis 3/,
bei welchem die zweite elektronische Einrichtung über eine Schnittstelle gemäß dem Bluetooth-Standard verfügt, mittels welcher die empfangenen elektronischen Daten über angekoppelte Endgeräte auslesbar sind.
